# EUROPÄISCHE PATENTSCHRIFT

(11) **EP 4 033 046 B1**
(45) Veröffentlichungstag und Bekanntmachung des Hinweises auf die Patenterteilung: **19.06.2024**
(21) Anmeldenummer: 22151864.0
(22) Anmeldetag: 17.01.2022
(51) Int. Cl.: E04B 1/58, F16B 5/06, E04B 1/24

(54) **VERBINDUNGSELEMENT UND SEINE VERWENDUNG ALS ECKVERBINDER**
CONNECTING ELEMENT AND ITS USE AS CORNER CONNECTOR
ÉLÉMENT DE LIAISON ET SON UTILISATION EN TANT QU'ÉQUERRE DE LIAISON

(30) Priorität: 20.01.2021 AT 500282021
(43) Veröffentlichungstag der Anmeldung: 27.07.2022
(73) Patentinhaber: Weißhaupt, Mario, 9412 St. Margarethen (AT)
(72) Erfinder: Weißhaupt, Mario, 9412 St. Margarethen (AT)
(74) Vertreter: Vinazzer, Edith

(56) Entgegenhaltungen:
- US-A- 5 901 526
- US-A1- 2014 130 411

## Beschreibung

Die Erfindung betrifft ein Verbindungselement zum stoßfreien Verbinden der Endabschnitte von zwei montierten Flachprofilen.

Verbindungselemente, insbesondere Eckverbinder, werden in unterschiedlichen Einsatzbereichen verwendet. Aus der EP 0 695 849 A1 ist beispielsweise ein Eckverbinder für Holmen von Fenstern und Türen mit in den Holmen festsetzbaren Winkelschenkeln, die in ihrem Scheitelbereich senkrecht zur Winkelebene schwenkbar miteinander verbunden sind, bekannt. Diese Eckverbinder verbinden Holme, die unter einem insbesondere rechten Winkel aneinanderstoßen und dazu auf Gehrung geschnitten sind. Aus der DE 3344555 A1 ist ein Eckverbinder für Hohlprofile für Fenster oder Türen bekannt, welcher zwei über einen Scharnierbolzen gelenkig verbundene Schenkel aufweist, die in einer Winkelstellung fixiert sind und die jeweils in eines der Hohlprofile eingreifen und mit diesem verbunden sind. Die Winkelstellungen sind beliebig wählbar, indem die im Scheitelbereich einander überlappenden Enden der Schenkel jeweils eine parallel zum Scharnierbolzen verlaufende, zueinander fluchtende Bohrung aufweisen, in die ein durchgehender Fixierstift eingesetzt werden kann. Aus der US 5,901,526 A ist ein Verbindungssystem für Holzteile, wie Holzbalken, mit einem ersten Element und einem zweiten Element zur Aufnahme der Enden der Holzbalken bekannt. Jedes Element weist eine Scharnierkomponente auf, sodass ein Scharnier gebildet ist, welches einen Scharnierstift aufnimmt, der das Verbindungsystem im Boden verankert.

Im Stahlbau ist es bei vielen Stahlkonstruktionen bzw. bei Stahlkonstruktionen aufweisenden Bauten üblich, Flachprofile aus Stahl zu montieren, deren Enden miteinander zu verbinden sind. Diese Verbindung erfolgt gemäß dem Stand der Technik durch Verschweißen. Verschweißen erfordert eine exakte Abstimmung der Enden aufeinander, was oft problematisch ist, da die Enden meist nicht passgenau und Stoß an Stoß zueinander liegen. Darüber hinaus erfordert Verschweißen eine entsprechende Ausrüstung und ist in der Durchführung zeitintensiv.

Der Erfindung liegt die Aufgabe zugrunde, ein Verbindungselement zur Verfügung zu stellen, welcher ein stoßfreies, unproblematisches, sicheres und schnelles Verbinden der Endabschnitte von zwei Flachprofilen, die bereits montiert sind, erlaubt.

Gelöst wird die gestellte Aufgabe erfindungsgemäß mit einem Verbindungselement mit zwei miteinander über ein Schwenkgelenk schwenkbar verbundenen Flügeln zum Aufschieben auf die Endabschnitte der Flachprofile,
wobei jeder Flügel
zumindest einen beim Aufschieben auf den Endabschnitt des Flachprofiles elastisch nachgebenden Flügelteil mit zumindest einem, das Flachprofil im Flügel haltenden Schnappelement,
zumindest ein elastisch verformbares Ausgleichselement zum Ausgleichen von Fertigungstoleranzen und Montagetoleranzen der Flachprofile,
zwei parallel zueinander verlaufende, rechteckige und weitgehend übereinstimmend ausgeführte Flügelwände und vier Seitenkantenbereiche aufweist,
von welchen einer das Schwenkgelenk mitbildet, ein weiterer dem Schwenkgelenk gegenüber ein offener stirnseitigen Kantenbereich ist und die beiden weiteren Seitenkantenbereiche, welche im rechten Winkel zum Schwenkgelenk verlaufen, ein offener Einschubbereich und eine Verbindung zwischen den beiden Flügelwänden sind, wobei am offenen Einschubbereich an der Kante der einen Flügelwand ein in Richtung zur zweiten, gegenüberliegenden Flügelwand weisender Umbug ausgebildet ist, welcher das Schnappelement bildet.

Das erfindungsgemäße Verbindungselement gestattet ein Verbinden von Flachprofilen, die entweder unter einem Winkel oder auch miteinander fluchtend positioniert sind. Der elastisch verformbare, zumindest ein Schnappelement aufweisende Flügelteil sorgt dafür, dass ein Aufschieben auf die Endabschnitte der Flachprofile ohne Zuhilfenahme von Werkzeug möglich ist und dass das Verbindungselement vor Verlust gesichert an den Flachprofilen hält. Das Ausgleichselement sorgt für einen Ausgleich von Fertigungstoleranzen und Montagetoleranzen der Flachprofile, sodass das Verbindungselement unverrückbar und sicher positioniert bleibt. Montagetoleranzen beziehen sich beispielsweise auf Unterschiede in der gegenseitigen Ausrichtung der Flachprofile. Es ist möglich, das Verbindungselement auf einfache Weise von oben auf die beiden miteinander zu verbindenden Endabschnitte der Flachprofile aufzusetzen. Bei montiertem Verbindungselement befinden sich die Schnappelemente außenseitig entlang der unteren Seitenkanten der Endabschnitte der Flachprofile und verhindern auf diese Weise ein unbeabsichtigtes Loslösen des Verbindungselementes von den Endabschnitten.

Bei einer bevorzugten Ausführung sind mittels des zumindest einen elastisch verformbaren Ausgleichelements zusätzlich Dickenunterschiede von Flachprofilen, insbesondere Unterschiede von bis zu 1,00 mm, ausgleichbar. Derartige Verbindungselemente können daher vorteilhafterweise sowohl zum Verbinden der Endabschnitte von Flachprofilen, die eine Dicke von beispielsweise 5,00 mm aufweisen, als auch zum Verbinden der Endabschnitte von Flachprofilen, die eine Dicke von beispielsweise 6,00 mm aufweisen, verwendet werden.

Vorteilhafterweise ist ferner zumindest eine der Flügelwände jedes Flügels der beim Aufschieben auf die Endabschnitte der Flachprofile elastisch nachgebende Flügelteil.

Bevorzugt ist das Schnappelement derart ausgestaltet, dass der das Schnappelement bildende Umbug am äußeren Ende der Flügelwand seine größte Breite aufweist, welche über den Verlauf des Schnappelementes entlang der Kante der Flügelwand kontinuierlich geringer wird. Dadurch wird der zum Aufsetzen des Verbindungselementes auf die beiden Endabschnitte der Flachprofile erforderliche Kraftaufwand, welcher mit einer elastischen Verformung der mit dem Schnappelement versehenen Flügelwände einhergeht, vergleichsweise gering gehalten und es wird gleichzeitig sichergestellt, dass das Verbindungselement auf den beiden Endabschnitten sicher positioniert bleibt. Bevorzugt beträgt dabei die größte Breite des Schnappelementes 1,50 mm bis 3,50 mm, die Länge des Schnappelementes zumindest 50 % und insbesondere bis zu 80 %, der Kantenlänge der Kante der Flügelwand.

Bei einer weiteren bevorzugten Ausführung ist das Ausgleichselement jeweils von zumindest an den Innenseiten der Flügelwände ausgebildeten und insbesondere senkrecht zum Schwenkgelenk verlaufenden, biegsamen bzw. elastisch verformbaren Lamellen gebildet. Derartige Lamellen schmiegen sich gut an die Außenseiten der Flachprofile an sind besonders gut dafür geeignet, Fertigungstoleranzen und Montagetoleranzen auszugleichen.

Ein Beschädigen der Lamellen beim Aufschieben des Verbindungselementes auf die Endabschnitte der Flachprofile wird besonders wirkungsvoll dadurch verhindert, dass die Lamellen in Richtung zur Verbindung der beiden Flügelwände bogenförmig gekrümmt sind. Die Lamellen weisen ferner bevorzugt eine Dicke in der Größenordnung von 0,34 mm bis 0,60 mm und eine Breite von 1,80 mm bis 2,20 mm auf.

Bei einer alternativen Ausführung des Ausgleichselementes ist dieses eine Einlage aus einem elastisch komprimierbaren Material, insbesondere aus einem geschlossenporigen, komprimierbaren Schaumstoff, beispielsweise aus geschlossenporigem Zellkautschuk. Auch diese Ausführungsvariante des Ausgleichselementes sorgt für einen guten Ausgleich von Fertigungstoleranzen und Montagetoleranzen.

Diesbezüglich ist es von Vorteil, wenn die Einlage im komprimierten Zustand eine Dicke von 1,00 mm bis 1,50 mm aufweist und sich zumindest in jenen Bereichen, welche mit den Flachprofilen in Kontakt kommen, befindet. Die Einlage kann in beide Flügeln eingelegt sein, sie kann dabei auch an den Innenseiten der Flügelwände angeklebt sein.

Gemäß einer weiteren bevorzugten Ausgestaltung ist das Schwenkgelenk von einem die beiden Flügel miteinander verbindenden Scharnier gebildet. Eine scharnierartige Verbindung gestattet es, einen großen Winkelbereich zwischen den beiden Flügeln wählen und einstellen zu können.

Ein gemäß der Erfindung gestaltetes Verbindungselement wird insbesondere als Eckverbinder zum stoßfreien Verbinden der Endabschnitte von zwei Flachprofilen aus Stahl verwendet, welche unter einem Winkel ≥ 75° und < 180° fixiert und positioniert sind.

Weitere Merkmale, Vorteile und Einzelheiten der Erfindung werden nun anhand der Zeichnung, die Ausführungsbeispiele darstellt, näher beschrieben. Dabei zeigen
Fig. 1 und Fig. 2 Außenansichten eines Verbindungselementes, welches auf den Endabschnitten von zwei Flachprofilen montiert ist,
Fig. 3 eine Innenansicht des Verbindungselementes,
Fig. 4 eine Unteransicht des Verbindungselementes,
Fig. 5 eine Draufsicht des Verbindungselementes,
Fig. 6 eine Schnittdarstellung des Verbindungselementes entlang der Linie VI-VI der Fig. 5,
Fig. 7 eine Schnittdarstellung des Verbindungselementes entlang der Linie VII-VII der Fig. 5,
Fig. 8 ein Detail der Fig.6 in vergrößerter Darstellung,
Fig. 9 eine Ansicht eines Bolzens und
Fig. 10 in einer zu Fig. 6 analogen Schnittdarstellung eine weitere Ausführungsform eines Verbindungselementes.

Die Figuren zeigen Ausführungsformen eines Verbindungselementes 1 zum Verbinden der Endabschnitte von zwei Flachprofilen 2 ohne gegenseitigen Stoß. Die Flachprofile 2 sind üblicherweise bereits in ihren Positionen fixiert, sodass sich ihre Enden in einem definierten Abstand zueinander befinden. Die Flachprofile 2 verlaufen zueinander üblicherweise unter Winkeln von 75° bis 180° bzw. 180° bis 285° und sind insbesondere Stahlprofile, beispielsweise mit einer Querschnittsfläche von 100,00 mm x 5,00 mm oder 100,00 mm x 6,00 mm. Derartige Stahl-Flachprofile werden insbesondere bei der Errichtung von konstruktiven Stahlbauten, beispielsweise Hallen- und Bühnenbauten, verwendet.

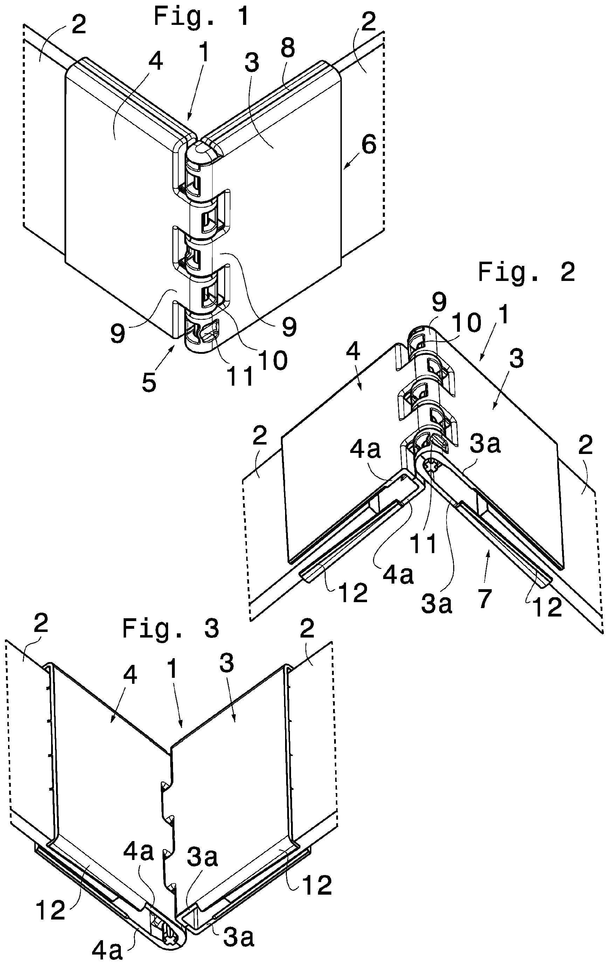

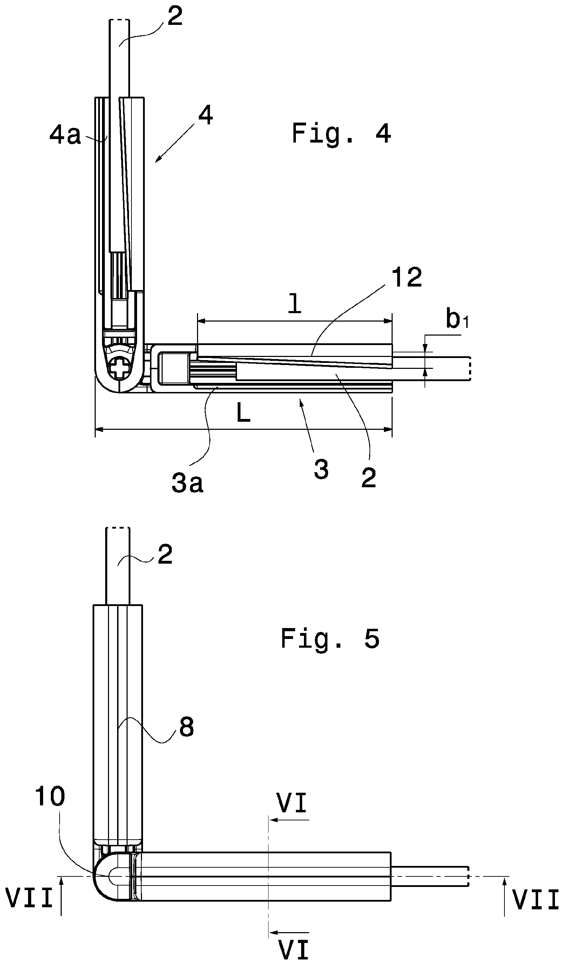

Das Verbindungselement 1 ist ein Kunststoffteil, welcher, wie beispielsweise Fig. 1, Fig. 2 und Fig. 3 zeigen, als Hauptbestandteile zwei insbesondere rechteckige Flügel 3, 4 aufweist, die miteinander schwenkbar, vorzugsweise scharnierartig, verbunden sind. Jeder Flügel 3, 4 weist zwei parallel zueinander verlaufende, weitgehend gleich gestaltete, rechteckige Flügelwände 3a, 4a und jeweils vier Seitenkantenbereiche auf, von welchen jeweils zwei parallel zueinander verlaufen. Einer der Seitenkantenbereiche ist als Teil eines Schwenkgelenkes 5, bei der gezeigten Ausführung eines Scharniers, ausgebildet, wobei diesem ein offener stirnseitigen Kantenbereich 6 gegenüberliegt. Die beiden weiteren Kantenbereiche verlaufen im rechten Winkel zum Schwenkgelenk 5 und sind ein offener Einschubbereich 7 (Fig. 2) und eine Verbindung 8 (Fig. 5) zwischen den beiden Flügelwänden 3a bzw. 4a. Der gegenseitige Abstand zwischen den Flügelwänden 3a bzw. 4a ist an die Dicke der Flachprofile 2, wie noch beschrieben wird, angepasst. Bei der gezeigten Ausführung ist die Verbindung 8 zwischen den Flügelwänden 3a, 4a geschlossen, nach außen gerundet sowie mit den Flügelwänden 3a, 4a einteilig ausgeführt.

Das erwähnte Schwenkgelenk 5 wird von Scharnierlaschen 9 und einem Bolzen 10 gebildet. Die Scharnierlaschen 9 verbinden jeweils die Seitenkanten der beiden Flügelwände 3a des eines Flügel 3 und die beiden die Seitenkanten der beiden Flügelwände 4a des zweiten Flügels 4. An dem einen Flügel 3 sind beispielsweise zwei Scharnierlaschen 9, an dem zweiten Flügel 4 beispielsweise drei Scharnierlaschen 9 ausgebildet sind, die ein Zusammenfügen der Flügel 3, 4 unter abwechselndem Positionieren der Scharnierlaschen 9 gestatten. Der Bolzen 10 ist durch sämtliche Scharnierlaschen 5 hindurch gesteckt und bildet die Schwenkachse der beiden Flügel 3, 4. Die schwenkbare Verbindung der Flügel 3, 4 über die Scharnierlaschen 9 und den Bolzen 10 ist derart gestaltet, dass die beiden Flügel 3, 4 im erwähnten Winkelbereich, insbesondere in der Größenordnung von 75° bis 270° gegeneinander bewegbar sind.

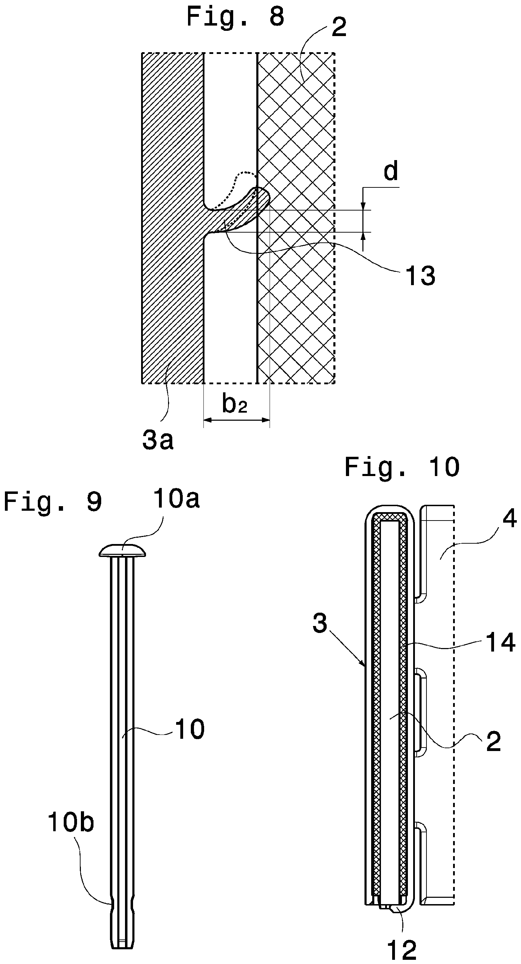

Fig. 9 zeigt eine Ansicht des Bolzens 10, welcher an seinem einen Ende mit einem Bolzenkopf 10a und an seinem zweiten Ende seitlich mit Einkerbungen 10b versehen ist, in welche beim Einsetzen des Bolzens 10 Schnappnasen 11 (Fig. 1) einrasten, die beim gezeigten Ausführungsbeispiel an der Innenseite der untersten Scharnierlasche 9 des Flügels 3 ausgebildet sind.

Am Einschubbereich 7 befinden die beiden in den Figuren unteren Kanten der Flügelwände 3a bzw. 4a. An der einen Kante der Flügelwand 3a bildet ein in Richtung zur zweiten, gegenüberliegenden Flügelwand 3a bzw. 4a nach innen gebogener Umbug ein Schnappelement 12 (Fig. 2, Fig. 4). Das Schnappelement 12 verläuft entlang der Kante über eine Länge l (Fig. 4) von zumindest 50 % und insbesondere bis zu 80 % der Kantenlänge L der Flügelwand 3a bzw. 4a, und insbesondere ausgehend vom Ende der Kante beim stirnseitigen Kantenbereich 6. Am äußeren Ende der Flügelwand 3a bzw. 4a weist das Schnappelement 12 eine Breite bi (Fig. 4) auf, welche insbesondere 1,50 mm bis 3,50 mm beträgt und welche über die Länge l kontinuierlich geringer wird, sodass das Schnappelement 12 an seinem zweiten Ende eine Breite aufweist, die um 30 % bis 50 % geringer ist als die Breite bi. Die Länge l des Schnappelementes 12 beträgt beispielsweise 35,00 mm bis 60,00 mm.

Zumindest ein, im Inneren jedes Flügels 3, 4 an der Innenseite der Flügelwände 3, 4 befindliches, elastisch verformbares Ausgleichselement sorgt für einen Ausgleich etwaiger Fertigungstoleranzen und Montagetoleranzen der Flachprofile 2. Bevorzugt sind die Ausgleichselemente auch derart ausgeführt, dass das Verbindungselement 1 zum Verbinden von Flachprofilen 2 geeignet ist, die unterschiedlich dick sind, beispielsweise von zwei Flachprofilen, die jeweils 5,0 mm und von zwei Flachprofilen, die 6,0 mm dick sind. Der Ausgleichbereich der Ausgleichselemente beträgt daher je Seite insbesondere bis zu 1,0 mm.

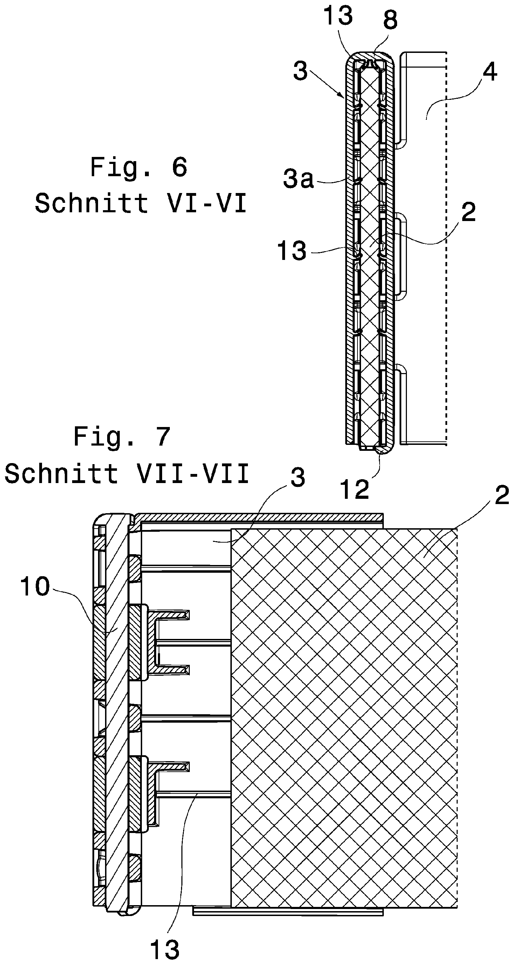

Bei der in Fig. 6 und bis Fig. 7 gezeigten Ausführung sind als Ausgleichselemente jeweils an jeder Innenseite der Flügelwände 3a, 4a senkrecht zum Bolzen 6 und daher parallel zueinander verlaufend biegsame bzw. elastisch verformbare Lamellen 13 ausgebildet, deren Anzahl auf jeder Innenseite beispielsweise drei bis zehn beträgt. Die Lamellen 13 durchqueren bei der gezeigten Ausführung die Innenseiten der Flügelwände 3a, 4a. Weitere Lamellen 13 sind an der Innenseite der Verbindung 8 ausgebildet. Fig. 8 zeigt ein Detail einer Flügelwand 3a im Schnitt im Bereich einer Lamelle 13, welche im nicht verformten Zustand und gestrichelt im verformten Zustand dargestellt ist. Wie zu sehen ist, ist die Lamelle 13 in Richtung zur Verbindung 8 der Flügelwände 3a bogenförmig gekrümmt und weist eine Dicke d in der Größenordnung von 0,34 mm bis 0,60 mm auf. Die Breite b₂ der Lamellen 13 beträgt beim Ausführungsbeispiel in der Größenordnung von 1,80 mm bis 2,20 mm.

Beim Aufschieben des Verbindungselementes 1 auf die Endabschnitte der Flachprofile 2 über die Einschubbereiche 7 werden die betreffenden Flügelwände 3a, 4a im Bereich ihrer Schnappelemente 12 etwas nach außen verformt bis die Flachprofile 2 innerhalb der Schnappelemente 12 einrasten. Die Lamellen 13 an den Innenseiten verbiegen sich beim Aufschieben auf die Flachprofile 2, liegen dadurch an den Flachprofilen 2 an und halten diese in einer definierten Lage innerhalb der Flügel 3, 4.

Bei der in den Fig. 10 gezeigten Ausführungsform ist das Ausgleichselement eine Einlage 14 aus einem elastisch komprimierbaren Material, beispielsweise aus einem geschlossenporigen, komprimierbaren Schaumstoff, beispielsweise aus geschlossenporigem Zellkautschuk. Die Einlage 14 ist eine im komprimierten Zustand ca. 1,0 mm bis 2,0 mm dünne Schicht und verläuft entlang der Innenseiten der Flügelwände 3a, 4a und der Verbindung 8, beispielsweise an den Innenseiten der Flügelwände 3a, 4a angeklebt, sowie zumindest in jenen Bereichen, welche mit den Flachprofilen 2 in Kontakt kommen.

Die Flügel 3, 4 und der Bolzen 10 werden im Spritzguss aus einem Kunststoff, insbesondere aus einem technischen Thermoplast wie beispielsweise Polybutylenterephthalat (PBT) hergestellt. Dieses Material gewährleistet sehr gute mechanische Eigenschaften, inklusive hoher Kälteschlagzähigkeit und Unabhängigkeit von der Umgebungsfeuchte. Darüber hinaus ist dieses Material UV-, temperatur- und chemikalienbeständig.

### Bezugsziffernliste

- 1.......................: Verbindungselement
- 2.......................: Flachprofil
- 3, 4...................: Flügel
- 3a, 4a...............: Flügelwand
- 5.......................: Schwenkgelenk
- 6.......................: stirnseitiger, offener Kantenbereich
- 7.......................: Einschubbereich
- 8.......................: Verbindung
- 9.......................: Scharnierlasche
- 10.....................: Bolzen
- 10a...................: Bolzenkopf
- 10b...................: Einkerbung
- 11.....................: Schnappnase
- 12.....................: Schnappelemente
- 13.....................: Lamelle
- 14.....................: Einlage
- b₁......................: Breite Schnappelement
- d.......................: Dicke
- b₂......................: Breite Lamelle
- L.......................: Kantenlänge Flügelwand
- L.......................: Länge Schnappelement

## Patentansprüche

1. Verbindungselement (1) zum stoßfreien Verbinden der Endabschnitte von zwei montierten Flachprofilen (2),
mit zwei miteinander über ein Schwenkgelenk (5) schwenkbar verbundenen Flügeln (3, 4) zum Aufschieben auf die Endabschnitte der Flachprofile (2), wobei jeder Flügel (3, 4)
zumindest einen beim Aufschieben auf den Endabschnitt des Flachprofiles (2) elastisch nachgebenden Flügelteil (3a, 4a) mit zumindest einem, das Flachprofil (2) im Flügel (3, 4) haltenden Schnappelement (12),
zumindest ein elastisch verformbares Ausgleichselement (13, 14) zum Ausgleichen von Fertigungstoleranzen und Montagetoleranzen der Flachprofile (2) und
zwei parallel zueinander verlaufende, rechteckige und weitgehend übereinstimmend ausgeführte Flügelwände (3a, 4a) und vier Seitenkantenbereiche aufweist,
von welchen einer das Schwenkgelenk (5) mitbildet, ein weiterer dem Schwenkgelenk (5) gegenüber ein offener stirnseitigen Kantenbereich (6) ist und die beiden weiteren Seitenkantenbereiche, welche im rechten Winkel zum Schwenkgelenk (5) verlaufen, ein offener Einschubbereich (7) und eine Verbindung (8) zwischen den beiden Flügelwänden (3a, 4a) sind,
wobei am offenen Einschubbereich (7) an der Kante der einen Flügelwand (3a, 4a) ein in Richtung zur zweiten, gegenüberliegenden Flügelwand (3a, 4a) weisender Umbug ausgebildet ist, welcher das Schnappelement (12) bildet.

2. Verbindungselement (1) nach Anspruch 1, **dadurch gekennzeichnet, dass** mittels des zumindest einen elastisch verformbaren Ausgleichselementes Dickenunterschiede von Flachprofilen (2), insbesondere Unterschiede von bis zu 1,0 mm, ausgleichbar sind.

3. Verbindungselement (1) nach Anspruch 1 oder 2, **dadurch gekennzeichnet, dass** zumindest eine der Flügelwände (3a, 4a) der Flügel (3, 4) der beim Aufschieben auf die Endabschnitte der Flachprofile (2) elastisch nachgebende Flügelteil ist.

4. Verbindungselement (1) nach Anspruch 1, **dadurch gekennzeichnet, dass** der das Schnappelement (12) bildende Umbug am äußeren Ende der Flügelwand (3a, 4a) seine größte Breite (bi) aufweist, welche über den Verlauf des Schnappelementes (12) entlang der Kante der Flügelwand (3a, 4a) kontinuierlich geringer wird.

5. Verbindungselement (1) nach Anspruch 1 oder 4, **dadurch gekennzeichnet, dass** die größte Breite (bi) des Schnappelementes (12) 1,5 mm bis 3,5 mm beträgt.

6. Verbindungselement (1) nach einem der Ansprüche 1, 4 oder 5, **dadurch gekennzeichnet, dass** das Schnappelement (12) eine Länge (l) von zumindest 50 % und insbesondere bis zu 80 % der Kantenlänge (L) der Kante der Flügelwand (3a, 4a) aufweist.

7. Verbindungselement (1) nach Anspruch 1 oder 2, **dadurch gekennzeichnet, dass** das Ausgleichselement jeweils von zumindest an den Innenseiten der Flügelwände (3a, 4a) ausgebildete und insbesondere senkrecht zum Schwenkgelenk (5) verlaufende, biegsame bzw. elastisch verformbare Lamellen (13) gebildet ist.

8. Verbindungselement (1) nach Anspruch 7, **dadurch gekennzeichnet, dass** die Lamellen (13) in Richtung zur Verbindung (8) der Flügelwände (3a, 4a) bogenförmig gekrümmt sind, vorzugsweise eine Dicke (d) in der Größenordnung von 0,34 mm bis 0,60 mm und eine Breite (b₂) von insbesondere 1,80 mm bis 2,20 mm aufweisen.

9. Verbindungselement (1) nach Anspruch 1 oder 2, **dadurch gekennzeichnet, dass** das Ausgleichselement eine Einlage (14) aus einem elastisch komprimierbaren Material, insbesondere aus einem geschlossenporigen, komprimierbaren Schaumstoff, beispielsweise aus geschlossenporigem Zellkautschuk, ist.

10. Verbindungselement (1) nach Anspruch 9, **dadurch gekennzeichnet, dass** die Einlage (14) im komprimierten Zustand eine Dicke von 1,0 mm bis 1,5 mm aufweist und sich zumindest in jenen Bereichen, welche mit den Flachprofilen (2) in Kontakt kommen, befindet.

11. Verbindungselement (1) nach Anspruch 9 oder 10, **dadurch gekennzeichnet, dass** die Einlage (14) an den Innenseiten der Flügelwände (3a, 4a) angeklebt ist.

12. Verbindungselement (1) nach Anspruch 1, **dadurch gekennzeichnet, dass** das Schwenkgelenk (5) von einem die beiden Flügel (3, 4) miteinander verbindenden Scharnier gebildet ist.

## Claims

1. Connecting element (1) for jolt-free connection of end sections of two assembled flat sections (2),
with two limbs (3, 4), swivellably connected to one another via a pivot joint (5), for sliding onto the end sections of the flat sections (2), wherein each limb (3, 4) has at least one limb part (3a, 4a) which can be expanded elastically upon sliding onto the end section of the flat section (2) with at least one snap fitting (12) holding the flat section (2) in the limb (3, 4),
at least one elastically deformable compensating element (13, 14) for compensating manufacturing tolerances and installation tolerances of the flat sections (2), and has two rectangular and extensively consistent limb walls (3a, 4a) running parallel to one another, and four side edge regions,
one of which jointly forms the pivot joint (5), one is a further, open frontal edge region (6) opposite the pivot joint (5), and the two further side edge regions which run at a right angle to the pivot joint (5) are an open insertion region (7) and a connection (8) between the two limb walls (3a, 4a), wherein a clip, pointing in direction of the second, opposing limb wall (3a, 4a) is formed on the open insertion region (7) at the edge of the one limb wall (3a, 4a), which clip forms the snap fitting (12).

2. Connecting element (1) according to claim 1, **characterised in that** differences in thickness of flat sections (2), in particular differences of up to 1.0 mm, can be compensated by means of the at least one elastically deformable compensating element.

3. Connecting element (1) according to claim 1 or 2, **characterised in that** at least one of the limb walls (3a, 4a) of the limbs (3, 4) is the limb part which is elastically expandable upon sliding onto the end sections of the flat sections (2).

4. Connecting element (1) according to claim 1, **characterised in that** the clip forming the snap fitting (12) has its greatest width (bi) at the outer end of the limb wall (3a, 4a), which width becomes continually smaller over the course of the snap fitting (12) along the edge of the limb wall (3a, 4a).

5. Connecting element (1) according to claim 1 or 4, **characterised in that** the greatest width (bi) of the snap fitting (12) is 1.5 mm bis 3.5 mm.

6. Connecting element (1) according to one of claims 1, 4 or 5, **characterised in that** the snap fitting (12) has a length (l) of at least 50 % and in particular up to 80 % of the edge length (L) of the edge of the limb wall (3a, 4a).

7. Connecting element (1) according to claim 1 or 2, **characterised in that** the compensating element is formed respectively by disks (13), which are flexible or elastically deformable, designed at least on the insides of the limb walls (3a, 4a) and running in particular perpendicular to the pivot joint (5).

8. Connecting element (1) according to claim 7, **characterised in that** the disks (13) are curved in an arc in direction of the connection (8) of the limb walls (3a, 4a), preferably have a thickness (d) in the order of magnitude of 0.34 mm to 0.60 mm and a width (b₂) of in particular 1.80 mm to 2.20 mm.

9. Connecting element (1) according to claim 1 or 2, **characterised in that** the compensating element is an insert (14) made of an elastically compressible material, in particular a closed-cell, compressible foam, for example closed-cell cellular rubber.

10. Connecting element (1) according to claim 9, **characterised in that**, in compressed state, the insert (14) has a thickness of 1.0 mm to 1.5 mm and is located at least in those regions which come into contact with the flat sections (2).

11. Connecting element (1) according to claim 9 or 10, **characterised in that** the insert (14) is affixed to the insides of the limb walls (3a, 4a).

12. Connecting element (1) according to claim 1, **characterised in that** the pivot joint (5) is formed from a hinge connecting the two limbs (3, 4) to one another.

## Revendications

1. Elément de liaison (1) pour relier sans choc les sections d'extrémité de deux profilés plats (2) montés,
avec deux ailes (3, 4) reliées l'une à l'autre de manière pivotante par une articulation pivotante (5) pour l'enfilage sur les sections d'extrémité des profilés plats (2), chaque aile (3, 4)
présentant au moins une partie d'aile (3a, 4a) cédant élastiquement lors de l'enfilage sur la section d'extrémité du profilé plat (2), avec au moins un élément d'encliquetage (12) maintenant le profilé plat (2) dans l'aile (3, 4),
au moins un élément de compensation (13, 14) élastiquement déformable pour compenser des
tolérances de fabrication et tolérances de montage des profilés plats (2) et
présente deux parois d'aile (3a, 4a) parallèles, rectangulaires et réalisées de manière largement concordante et quatre zones de bord latéral,
dont l'une forme conjointement l'articulation pivotante (5), une autre est une zone de bord frontal (6) ouverte par rapport à l'articulation pivotante (5) et les deux autres zones de bord latéral, qui s'étendent à angle droit par rapport à l'articulation pivotante (5), sont une zone d'insertion ouverte (7) et une liaison (8) entre les deux parois d'aile (3a, 4a), une courbure orientée en direction de la deuxième paroi d'aile opposée (3a, 4a) étant formée sur la zone d'insertion ouverte (7) sur le bord de l'une des parois d'aile (3a, 4a), laquelle forme l'élément d'encliquetage (12).

2. Elément de liaison (1) selon la revendication 1, **caractérisé en ce que** des différences d'épaisseur de profilés plats (2), en particulier des différences allant jusqu'à 1,0 mm, peuvent être compensées au moyen de l'au moins un élément de compensation élastiquement déformable.

3. Elément de liaison (1) selon la revendication 1 ou 2, **caractérisé en ce qu'**au moins l'une des parois (3a, 4a) des ailes (3, 4) est la partie d'aile cédant élastiquement lors de l'enfilage sur les sections d'extrémité des profilés plats (2).

4. Elément de liaison (1) selon la revendication 1, **caractérisé en ce que** la courbure formant l'élément d'encliquetage (12) présente sa plus grande largeur (bi) à l'extrémité extérieure de la paroi d'aile (3a, 4a), laquelle diminue de manière continue sur le parcours de l'élément d'encliquetage (12) le long du bord de la paroi d'aile (3a, 4a).

5. Elément de liaison (1) selon la revendication 1 ou 4, **caractérisé en ce que** la plus grande largeur (bi) de l'élément d'encliquetage (12) est comprise entre 1,5 mm et 3,5 mm.

6. Elément de liaison (1) selon l'une des revendications 1, 4 ou 5, **caractérisé en ce que** l'élément d'encliquetage (12) présente une longueur (1) d'au moins 50 % et en particulier jusqu'à 80 % de la longueur d'arête (L) du bord de la paroi d'aile (3a, 4a).

7. Elément de liaison (1) selon la revendication 1 ou 2, **caractérisé en ce que** l'élément de compensation est formé respectivement par des lamelles (13) flexibles ou élastiquement déformables, formées au moins sur les côtés intérieurs des parois d'aile (3a, 4a) et s'étendant en particulier perpendiculairement à l'articulation pivotante (5).

8. Elément de liaison (1) selon la revendication 7, **caractérisé en ce que** les lamelles (13) sont courbées en forme d'arc en direction de la liaison (8) des parois d'aile (3a, 4a), présentent de préférence une épaisseur (d) de l'ordre de 0,34 mm à 0,60 mm et une largeur (b₂) de 1,80 mm à 2,20 mm notamment.

9. Elément de liaison (1) selon la revendication 1 ou 2, **caractérisé en ce que** l'élément de compensation est un insert (14) en un matériau élastiquement compressible, en particulier en une mousse compressible à pores fermés, par exemple en caoutchouc cellulaire à pores fermés.

10. Elément de liaison (1) selon la revendication 9, **caractérisé en ce que** l'insert (14) présente à l'état comprimé une épaisseur de 1,0 mm à 1,5 mm et se trouve au moins dans les zones qui entrent en contact avec les profilés plats (2).

11. Elément de liaison (1) selon la revendication 9 ou 10, **caractérisé en ce que** l'insert (14) est collé sur les côtés intérieurs des parois d'aile (3a, 4a).

12. Elément de liaison (1) selon la revendication 1, **caractérisé en ce que** l'articulation pivotante (5) est formée par une charnière reliant les deux ailes (3, 4) entre elles.
